# FASCICULE DE BREVET EUROPEEN

(11) **EP 1 474 636 B1**
(45) Date de publication et mention de la délivrance du brevet: **15.12.2010**
(21) Numéro de dépôt: 03727555.9
(22) Date de dépôt: 13.02.2003
(51) Int. Cl.: F23D 14/70, F23C 3/00, F23C 5/24, F23M 9/06, C03B 37/05

(54) **BRULEUR A COMBUSTION INTERNE, NOTAMMENT POUR L'ETIRAGE DE FIBRES MINERALES**
BRENNER FÜR GESCHLOSSENE VERBRENNUNG, INS BESONDERE ZUM STRECKEN VON MINERALFASERN
INTERNAL COMBUSTION BURNER, PARTICULARLY FOR DRAWING MINERAL FIBRES

(30) Priorité: 13.02.2002 FR 0201755
(43) Date de publication de la demande: 10.11.2004
(73) Titulaire: SAINT-GOBAIN ISOVER, 92400 Courbevoie (FR)
(72) Inventeur: BOULANOV, Oleg, F-60290 Rantigny (FR); ELLISON, Christopher, 60140 Liancourt (FR); BERNARD, Jean-Luc, F-60600 Clermont (FR)
(74) Mandataire: Aupetit, Muriel J. C.
(86) Numéro de dépôt international: PCT/FR2003/000449
(87) Numéro de publication internationale: WO 2003/069226

(56) Documents cités:
- WO-A-98/27386
- DE-C- 427 974
- US-A- 1 340 226
- US-A- 2 994 367
- US-A- 3 363 663
- US-A- 3 736 094
- US-A- 3 809 062
- US-A- 4 818 218
- US-A- 5 551 869

## Description

L'invention concerne un brûleur à combustion interne, apte à produire des courants gazeux à haute température et à grande vitesse. Plus particulièrement, l'invention s'intéresse aux brûleurs que l'on utilise dans les procédés de formation de fibres minérales et dans lesquels l'étirage des fibres résulte des courants gazeux émis par lesdits brûleurs seuls, ou en combinaison avec d'autres moyens tels que des moyens de centrifugation ou des moyens d'étirage du type filière. On pourra se reporter, pour plus de détails sur des procédés de fibrage utilisant un centrifugeur (centrifugation interne), aux brevets WO 99/65835, WO.97/15532, FR-2 677 973, FR-2 576 671, FR-2 524 610, FR-2 801 301, FR-2 576 671, EP-189 354, EP-519 797. On pourra se reporter, pour un fibrage par centrifugation dite externe ou avec un rotor aux brevets suivants : EP 991 601, WO 97/0396, WO 97/0395, EP 465 310.

Idéalement, ce type de brûleur doit répondre le mieux possible à de nombreuses exigences : Il doit être sûr, fiable. Il doit aussi avoir le régime de fonctionnement le plus stable possible, avec notamment une flamme qui ne risque pas d'être soufflée, une flamme bien cantonnée et "accrochée" dans la chambre de combustion. On peut aussi vouloir que le brûleur ait le moins d'inertie possible, soit d'un régime facile à modifier. On vise aussi un maximum de durabilité, une fabrication pas trop complexe, un encombrement réduit. Par ailleurs, il faut qu'il puisse s'adapter facilement aux dispositifs de fibrage auxquels il est associé, aux compositions des matériaux à fibrer (qui conditionnent leur comportement à chaud, leur viscosité tout particulièrement), au type de fibres minérales que l'on cherche à obtenir (notamment leurs caractéristiques dimensionnelles).

Toutes ces exigences parfois contradictoires ont conduit à l'élaboration de différents types de brûleurs à combustion interne.

Un brûleur intéressant est décrit en détails dans le brevet US 4 818 218-A; La chambre de combustion est alimentée en un mélange comburant/combustible, et on utilise ses parois, qui sont en ciment réfractaire présentant de petites aspérités, pour "accrocher" la flamme, pour la stabiliser. La chambre de combustion est également profilée de façon à ce que les gaz brûlés fassent un parcours relativement long, suivant les parois incurvées de la chambre de combustion, ceci afin de réduire les zones "inertes" de la chambre de combustion, c'est à dire les zones dans lesquelles une certaine quantité de gaz pourrait se trouver plus au moins immobilisée.

Ce brûleur est d'un fonctionnement satisfaisant. Cependant, il présente certaines limitations intrinsèques à sa conception. Ainsi, il marche bien quand on vise des températures de gaz en sortie de brûleurs relativement standards, c'est à dire assez élevées, de 1 500 ou 1 600°C par exemple. Par contre, il est plus délicat d'obtenir un régime de fonctionnement parfaitement stable si l'on vise des températures de gaz en sortie de brûleur un peu moins élevées, par exemple de l'ordre de 1 400°C. Pour abaisser la température, il est possible d'ajouter du comburant (de l'air) dans le mélange air/gaz alimentant la chambre de combustion, mais cette "dilution" a des limites au-delà desquelles on risque d'éteindre la flamme. Ce brûleur fonctionne dans un régime encadré par des paramètres de température et aussi de pression à la sortie de brûleur. Le régime de pression est « étroit » , et cette configuration ne permet pas d'élargir cette plage de travail, car à basse pression des phénomènes de pompage par instabilité du régime de combustion dans le brûleur apparaissent. A haute pression, la flamme risquerait de « sortir » du brûleur et d' être « soufflée».

L'invention a alors pour but de perfectionner des brûleurs à combustion interne, notamment afin de pallier les inconvénients cités plus haut. Elle vise notamment à obtenir des brûleurs qui soient plus souples de fonctionnement, plus adaptables en termes de gammes de température, de vitesse, de débit des gaz en sortie de brûleur. Accessoirement, elle vise à obtenir de préférence des brûleurs avec une faible inertie, de régime stable, et fiables.

L'invention a tout d'abord pour objet un brûleur à combustion interne, notamment pour l'étirage de fibres minérales selon l'objet de la revendication 1.

Pour réaliser la combustion, les inventeurs ont en fait adapté et concrétisé le principe de combustion d'une chambre de post-combustion d'un moteur d'avion. Dans cette technologie, il existe plusieurs flammes que l'on maintient "accrochées" dans la partie chaude de la chambre de post-combustion, avec une sorte de gouttière appelée "accroche-flammes". Même si le domaine technique qui intéresse l'invention n'a rien à voir, les inventeurs ont tenté avec succès de transposer ces accroches-flammes dans un brûleur pour l'étirage de fibres minérales. Il s'est avéré que la présence d'un tel élément stabilisateur de flammes était extrêmement efficace, et permettait donc de stabiliser le régime du brûleur, même dans des conditions de régime un peu extrêmes, par exemple quand on vise l'obtention de gaz en sortie de brûleurs qui soient particulièrement chauds ou, au contraire, plutôt "froids" (les termes de "chaud" et de "froid" étant bien sûr à relativiser, et à considérer dans le contexte du domaine technique de la présente invention, où les températures sont en tout état de cause d'au moins 500 ou 1 000°C).

Avantageusement, ce sont dans ces zones de confinement que la majorité et de préférence l'essentiel, voire la totalité, de la combustion s'effectue. Ainsi, au lieu d'accrocher la flamme aux parois de la chambre de combustion, comme dans le cas du brûleur décrit dans le brevet précité, on accroche la flamme sur un élément additionnel, qui vient permettre de maîtriser, concentrer, localiser la flamme où on le désire dans la chambre de combustion. En fait, le stabilisateur de flammes est avantageusement conçu dans sa forme géométrique de façon à maintenir dans son "sillage" la zone dite de confinement, qui est une zone de recirculation de gaz que l'on détaillera par la suite, le temps de séjour de ces gaz dans cette zone était suffisamment long pour que la combustion s'y maintienne. La zone de confinement peut aussi être définie comme une zone où la vitesse des gaz est plus faible que dans le reste de la chambre de combustion. Il est créé dans cette zone de confinement une stagnation des fluides dans laquelle peut être maintenue la combustion.

Cette zone de confinement/de recirculation constitue alors une zone stable de gaz chauds, qui est apte à "libérer" en permanence un certain débit de gaz brûlés.

Selon l'invention, le brûleur à combustion interne, notamment pour l'étirage de fibres minérales, comprenant une chambre de combustion dans laquelle débouche(nt) au moins un conduit d'alimentation en combustible(s) et en comburant(s), et munie d'un orifice de détente, est **caractérisé en ce que** la chambre de combustion est munie d'au moins un élément stabilisateur de flamme qui comporte deux parois pleines sensiblement en regard et réunies en l'une de leurs extrémités par un fond plein de manière à constituer une zone semi-ouverte d'ouverture opposée au fond, une zone de confinement étant crée entre les parois et à proximité de l'ouverture, et dans laquelle s'effectue au moins une partie de la combustion entre comburant(s) et combustible(s).

La localisation et la configuration du stabilisateur de flammes selon l'invention vont pouvoir, accessoirement, influer sur la façon dont les gaz brûlés vont ensuite circuler dans la chambre de combustion avant leur évacuation par l'orifice de détente. Comme on l'a évoqué plus haut, l'objectif est généralement que ces gaz brûlés occupent le maximum du volume de la chambre de combustion.

On prévoit ainsi avantageusement que le(s) stabilisateurs(s) de flamme(s) soi(en)t disposé(s) à proximité de la paroi interne de la chambre de combustion. C'est en effet une configuration favorable pour que les gaz brûlés sortant de la zone de confinement soient amenés à longer la paroi de la chambre de combustion, à la "remplir" au mieux lors de leur parcours à l'intérieur de celle-ci.

La chambre de combustion comprend de préférence une pluralité de stabilisateurs. Prenons la convention, pour plus de clarté, que le brûleur selon l'invention se trouve dans la position adéquate en association avec un ou plusieurs moyens de fibrage du type filière ou assiette de centrifugation. Dans le cas d'une filière, qu'on présume linéaire et placée selon un plan horizontal, le brûleur de l'invention est placé à proximité de la filière, également dans une configuration linéaire dans un plan sensiblement horizontal. Dans ce cas, la chambre de combustion présente avantageusement, selon ce plan horizontal, une section de type parallélogramme, une section rectangulaire par exemple. Et selon ce plan horizontal, la chambre comprend de préférence au moins deux stabilisateurs mis côte à côte, et de préférence au moins (forme, taille) cinq ou dix, de préférence espacés régulièrement. La section horizontale de la chambre de combustion et le nombre de stabilisateurs sont à sélectionner de façon à pouvoir générer suffisamment de gaz chaud en sortie de filière, sur toute la longueur de celle-ci.

Dans le cas d'une "assette" de centrifugation (c'est-à-dire un centrifugeur apte à tourner autour d'un axe généralement vertical, alimenté en verre fondu et dont la boucle périphérique est percée d'une pluralité d'orifices), le brûleur selon l'invention a de préférence une forme qui est schématiquement annulaire, puisqu'il va entourer en quelque sorte l'assiette de centrifugation. En position de centrifugation, donc selon un plan sensiblement horizontal, la section de la chambre de combustion va être globalement annulaire, et munie de plusieurs stabilisateurs disposés concentriquement dans celle-ci. Là encore, il est avantageux que ces stabilisateurs soient espacés régulièrement les uns les autres.

Qu'il s'agisse d'un brûleur pour filière (linéaire) ou d'un brûleur pour assiette de centrifugation (de type annulaire) la distance entre deux stabilisateurs adjacents est de préférence à choisir de façon à ce que les courants de gaz brûlés issus de ceux-ci se rejoignent à une distance donnée des stabilisateurs, pour former un courant chaud unifié et le plus homogène possible.

Qu'il s'agisse d'un brûleur pour filière ou pour assiette de centrifugation, la chambre de combustion en section verticale (en considérant toujours le brûleur en association avec les organes de fibrage en position de fibrage) peut ne comporter qu'un seul stabilisateur. Selon une autre variante, elle peut aussi en comporter plusieurs en section verticale, par exemple deux se trouvant l'un "au-dessus" de l'autre. Là encore, la distance les séparant est à ajuster, notamment afin que les "nappes" de gaz chaud générés par chaque série de stabilisateur (une série par plan horizontal) puissent avantageusement s'interpénétrer. De préférence, les stabilisateurs des différentes rangées sont disposés en quinconce, notamment pour faciliter la circulation d'air (le comburant) d'une rangée à l'autre, pour assurer si nécessaire, entre autres fonctions, un refroidissement satisfaisant de l'ensemble des stabilisateurs.

Avantageusement, le ou les stabilisateurs de flamme selon l'invention sont majoritairement, notamment essentiellement, métalliques. Avantageusement encore, les stabilisateurs sont montés dans la chambre de combustion de façon à ce qu'on puisse régler leur positionnement ; notamment de façon à pouvoir les faire pivoter autour d'un axe, par exemple l'axe de l'arrivée du combustible.

La forme géométrique des stabilisateurs peut être très variée, à partir du moment où elle permet de définir une zone de confinement dont les gaz brûlés peuvent s'échapper. On peut choisir une forme géométrique présentant une symétrie selon un plan et/ou selon un axe. La forme en question peut notamment présenter deux symétries selon deux plans perpendiculaires l'un à l'autre.

Selon une variante préférée, la projection de sa forme géométrique perpendiculairement à son plan de symétrie (ou à l'un de ses plans de symétrie si elle en a plusieurs) est sous la forme approximative d'un V ou d'un U. Selon une autre variante préférée, alternative ou cumulative avec la précédente, sa projection perpendiculairement à son plan de symétrie (ou à l'autre de ses plans de symétrie si elle en a deux) se présente sous la forme approximative d'un triangle aux coins arrondis, notamment sensiblement isocèle.

Venons-en à la façon d'alimenter en comburant et en combustible le brûleur. Avantageusement, au moins un conduit d'alimentation alimenté en combustible(s) (du type gaz naturel) débouche dans la zone de confinement du stabilisateur de flammes (ou dans au moins l'une d'entre elles s'il y a plusieurs stabilisateurs). La position relative de l'orifice de sortie du conduit et du stabilisateur est de préférence choisie de façon à ce que le(s) gaz soi(en)t projeté(s) contre les parois du stabilisateur définissant la zone de confinement. On oblige ainsi le gaz combustible à se répartir au mieux dans la zone de confinement. Par exemple, l'orifice de sortie est agencé entre les parois et à proximité du fond du stabilisateur. En variante, l'orifice de sortie peut être situé à l'avant du stabilisateur, et de manière excentrée par rapport à son axe de symétrie, le flux du gaz étant dirigé vers l'intérieur du stabilisateur. Ces deux configurations peuvent être envisagées dans le même brûleur de sorte qu'il est possible de choisir l'un ou l'autre des orifices de sortie selon la gamme de température à laquelle le fibrage est réalisé. Les termes "avant " et "derrière " en référence au stabilisateur sont définis dans la suite de la description comme, étant à proximité de l'ouverture du stabilisateur et à l'opposé du fond du stabilisateur, et respectivement, étant du côté opposé à l'ouverture, et à l'extérieur du stabilisateur de manière opposée au fond du stabilisateur. Le conduit d'alimentation peut être alimenté totalement ou essentiellement en combustible. Il peut aussi n'être alimenté que majoritairement ou même que partiellement, en combustible, le reste étant par exemple constitué de comburant du type air, ou d'autres gaz participant ou non à la combustion.

Parallèlement, on dispose avantageusement le(s) conduit(s) d'alimentation en comburant (par exemple de l'air, de l'oxygène, de l'air enrichi en oxygène) de façon à ce qu'il(s) débouche(nt) dans la chambre de combustion afin de projeter le comburant du côté des parois du stabilisateur opposé à celui se trouvant en contact direct avec la zone de confinement. Schématiquement, un mode de réalisation préféré consiste donc à injecter le gaz combustible dans la zone de confinement, à l'intérieur même du stabilisateur ou à l'avant du stabilisateur, et à injecter le comburant, (l'air), "derrière" le stabilisateur de flammes, pour créer un écoulement de comburant (d'air) venant envelopper le stabilisateur, une partie variable de cet air se trouvant alors piégée dans la zone de confinement. La zone de confinement, dans ce cas de figure où les alimentations en comburant et combustible sont distinctes, a alors deux rôles : le premier est d'assurer le mélange comburant/combustible, le second d'assurer et de maintenir leur combustion.

Là encore, le conduit d'alimentation en comburant peut être alimenté à 100% en comburant. Mais il peut aussi n'être alimenté qu'essentiellement, majoritairement ou partiellement en comburant, le reste étant par exemple constitué de combustible, ou de tout autre gaz participant ou non à la combustion.

On peut ainsi choisir un conduit d'alimentation de gaz débouchant dans la zone de combustion qui soit alimenté en un mélange gazeux comburant/combustible dans des proportions modulables, et un conduit d'alimentation débouchant "derrière" le stabilisateur comme expliqué plus haut qui, lui, est alimenté majoritairement en comburant du type air : cette arrivée de comburant permet d'une part de modifier le ratio comburant/combustible dans la zone de confinement, et d'autre part de "refroidir" si nécessaire les parois du stabilisateur.

Comme on l'a vu plus haut, il est préférable qu'on associe à chaque stabilisateur, quand il y en a plusieurs, un conduit d'alimentation contenant du combustible et débouchant dans sa zone de confinement. Par exemple, un seul conduit d'alimentation contenant du comburant (typiquement, par exemple, 100% d'air pour prendre le fonctionnement le plus simple) peut "alimenter" plusieurs stabilisateurs adjacents par un positionnement et une configuration adaptée (s'il débouche "entre" deux stabilisateurs adjacents par exemple, et/ou s'il prend la forme d'une rampe percée ou d'une lèvre).

Il est également envisagé dans le cadre de l'invention de choisir des conduits d'alimentation véhiculant un mélange comburant/combustible, le mélange ayant été réalisé avant injection dans la chambre de combustion (une autre variante est qu'un type de conduit véhicule 100% de comburant ou 100% de combustible, et l'autre un mélange comburant/combustible).

Cependant, choisir les conduits d'alimentation en comburant et en combustible qui soient séparés est très intéressant industriellement, à plus d'un titre : On évite une étape préalable de mélange, le mélange se faisant in situ dans la chambre de combustion. On supprime tout risque d'explosion du mélange dans les conduits d'alimentation du brûleur. Dans le cadre plus spécifique à l'invention de l'utilisation du stabilisateur de flammes, on peut jouer séparément sur les caractéristiques du comburant et du combustible : on peut régler indépendamment l'un de l'autre le débit d'air et le débit de gaz, leurs vitesses relatives. Or dans le mode de réalisation décrit plus haut, ce sont des paramètres qui vont permettre d'assurer au mieux le mélange des deux gaz dans la zone de confinement. On pourra avoir ainsi du gaz combustible injecté grande vitesse dans la zone de confinement, qui va se trouver enveloppé par un courant de comburant du type air de vitesse, par exemple bien moindre. Cela crée un échange gazeux contrôlable, donc un mélange que l'on peut maîtriser et une combustion que l'on peut assurer au mieux entre les deux types de gaz dans cette zone.

Comme évoqué plus haut, on privilégie un positionnement du(des) stabilisateur(s) de flamme(s) par rapport à la paroi interne de la chambre de combustion de façon à ce qu'il contraigne les gaz brûlés à longer au moins une partie de cette paroi, notamment selon un parcours approximativement sous forme d'une boucle. On a alors intérêt à profiler la paroi interne de façon à maximiser le parcours du courant de gaz brûlés issus de la ou des zones de confinement.

Dans le cas d'un brûleur adapté pour un moyen d'étirage de type filière, avec les conventions précédemment décrites, la géométrie de la cavité définie par les parois de la chambre de combustion peut être la suivante :
- en coupe horizontale, sa section peut être approximativement de forme rectangulaire,
- en coupe verticale, sa section peut être avantageusement au moins partiellement courbe

Il peut s'agir par exemple de la juxtaposition de deux portions de cercles des rayons identiques ou , de préférence, différents, soit directement accolés soit reliés l'un à l'autre par des lignes droites. En parlant cette fois en volume, il peut donc s'agir de deux portions de sphère reliées par une zone annulaire. On peut parler aussi d'une enveloppe sensiblement ovoïdale en volume. Bien sûr, de nombreuses variantes peuvent être prévues, s'inspirant de celle-ci.

Dans le cas d'un brûleur adapté pour un moyen d'étirage de type assiette de centrifugation, toujours avec les mêmes conventions, la géométrie de la cavité de la chambre de combustion peut être la suivante :
- en coupe horizontale, sa section peut être sensiblement annulaire,
- en coupe verticale, sa section peut être du type décrit par le brûleur associé à une filière.

La forme de la cavité définie par la chambre de combustion peut en outre être telle qu'elle contraigne le courant de gaz brûlés à se séparer en deux à proximité de l'orifice de détente : un courant est évacué par ledit orifice, tant que l'autre poursuit son parcours, notamment en forme de boucle, dans la chambre de combustion.

Selon l'invention, l'élément stabilisateur de flammes (ou au moins l'un d'eux s'il y en a plusieurs), est à proximité à la fois de la paroi interne de la chambre de combustion et de l'orifice de détente. On peut ainsi contraindre les gaz brûlés à circuler de l'une à l'autre en longeant la paroi de la chambre, en choisissant le parcours le plus long pour y parvenir.

Avantageusement, pour faciliter cette circulation, l'essentiel, voire la totalité, de la forme de la paroi interne de la chambre est courbe (selon un plan "vertical" au sens de l'invention).

Selon l'invention, on interpose un déflecteur entre le stabilisateur de flammes et l'orifice de détente, déflecteur derrière lequel débouche de préférence le conduit d'alimentation en comburant. Ce déflecteur peut remplir au moins l'un des rôles suivants :
- empêcher que des gaz brûlés issus de la zone de confinement ne puissent être évacués à peine sortis de cette zone par l'orifice de détente, ce qui assure qu'ils vont bien faire un trajet bien plus long dans la chambre avant d'être évacués.
- guider le comburant (l'air) en direction du stabilisateur de flammes, pour éviter tout risque que ce comburant puisse s'engouffrer dans l'orifice de détente.

Ce déflecteur peut être un élément additionnel, ou faire partie intégrante de la paroi interne de la chambre de combustion par un profil approprié. De préférence, l'orifice de détente de la chambre de combustion débouche sur une chambre de post-combustion optionnelle. Cette chambre s'achève de préférence par une lèvre se situant à l'extrémité d'une zone de rétrécissement On peut ensuite régler la taille et la forme de la section de cette lèvre, ainsi que son inclinaison, en fonction des besoins.

Avantageusement, la paroi de la chambre de combustion est en fait une double paroi. On peut y faire circuler, au moins dans une partie de celle-ci, le comburant (généralement d'air) qui va alimenter le brûleur avant qu'il ne soit injecté dans la chambre de combustion : on favorise ainsi des échanges thermiques entre ce gaz et la chambre, permettant notamment de préchauffer celui-ci. On peut aussi prévoir d'équiper la chambre de combustion de moyens de refroidissement extérieurs. Il peut s'agir par exemple d'un système de boîte à eau.

La paroi interne, et même de préférence l'ensemble de la double paroi quand il y en a une, de la chambre de combustion est avantageusement essentiellement métallique : un brûleur dont la chambre de combustion est métallique, par exemple en acier, a une durée de vie plus élevée, est plus facile d'entretien et est plus léger qu'un brûleur traditionnel utilisant beaucoup de matériaux réfractaires du type silico-argileux.

On peut utiliser les brûleurs selon l'invention dans des procédés de fibrage variés. Dans le cas du procédé de fibrage dit interne, on utilise un centrifugeur dont la bande périphérique est percée d'orifices et dans lequel on déverse le matériau à fibrer. De manière préférée, le matériau à fibrer est d'abord versé dans un panier percé d'orifices et tournant à la même vitesse que le centrifugeur, lesdites orifices permettant d'alimenter la bande périphérique du centrifugeur. Ce centrifugeur est associé, pour étirer les cônes de matière en fusion sortant desdits orifices, à un système de brûleurs annulaires projetant du gaz à haute vitesse et haute température, comme cela est décrit dans les brevets cités en préambule. Dans ce cas là, on peut alors associer une pluralité de brûleurs selon l'invention, de façon à ce qu'ils soient disposés concentriquement autour de la machine de fibrage du type centrifugeur.

Dans le cas d'un procédé de fibrage avec un étirage à partir d'une filière un seul brûleur selon l'invention, ou plusieurs disposés de façon linéaire, peuvent être utilisés pour assurer l'étirage gazeux des fibres en sortie de filière.

Dans le cas d'un procédé de fibrage utilisant une assiette de centrifugation ou un rotor alimenté en verre fondu, on utilise un brûleur selon l'invention qui est globalement annulaire.

La chambre de combustion peut déboucher sur une chambre dite de post-combustion. Dans cette chambre de post-combustion, peut s'effectuer une combustion complémentaire, qui peut être due à la combustion de combustible en excès provenant de la chambre de combustion. Elle peut aussi être provoquée en amenant dans la chambre de post-combustion par un conduit approprié une certaine quantité de combustible.

L'invention sera détaillée ci-après à l'aide d'un exemple de réalisation non limitatif, avec les figures suivantes :
- figure 1 : un plan en coupe verticale d'un brûleur annulaire selon l'invention,
- figure 2 : un plan en coupe horizontale du brûleur selon la figure 1,
- figure 3 : un plan en coupe du stabilisateur de flammes utilisé dans la chambre de combustion du brûleur selon les figures 1 et 2.
- figure 4 : la représentation de plusieurs stabilisateurs côte à côte dans un brûleur de type linéaire.
- figures 5a, 5b : la représentation très schématique d'un centrifugeur susceptible d'utiliser le brûleur annulaire selon les figures 1 à 3.

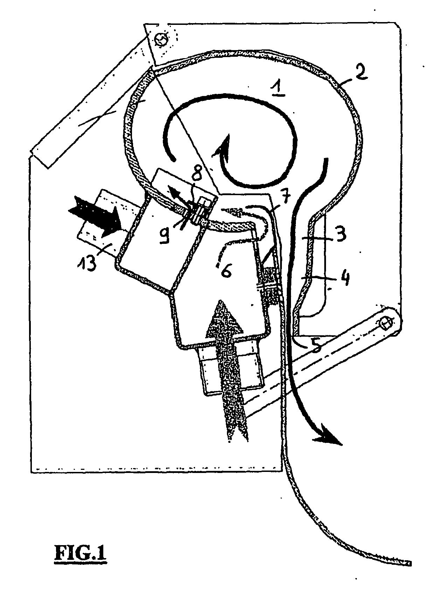

Ces figures sont schématiques, et pas strictement à l'échelle pour en faciliter la lecture. La figure 1 représente donc un brûleur selon l'invention dans son ensemble, en coupe transversale, selon un plan vertical. Le brûleur se trouve en position de fibrage, autour d'une assiette de centrifugation d'axe de rotation vertical, et qui n'est pas représentée. Cette figure n'est qu'une demi-coupe (le brûleur ayant une symétrie de révolution autour d'un axe vertical).

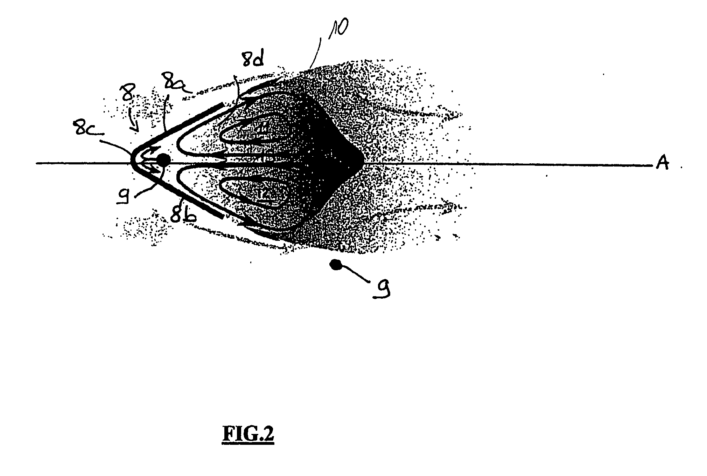

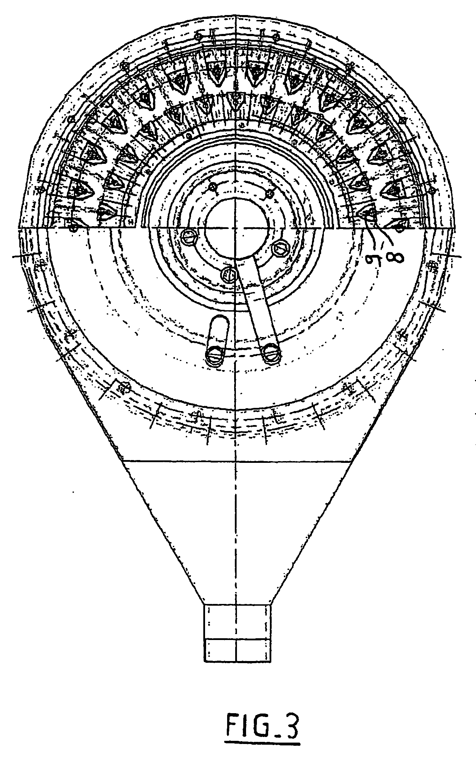

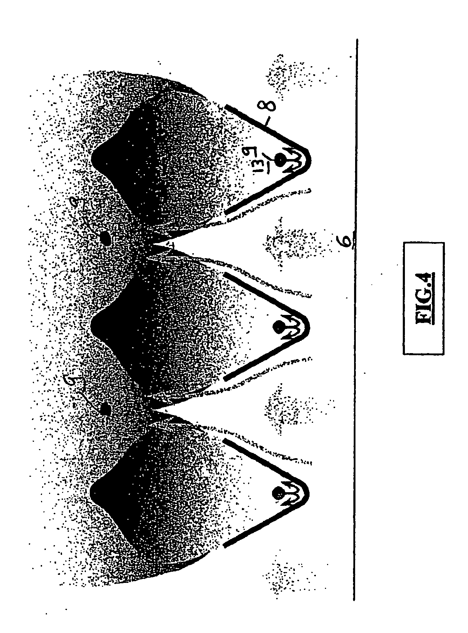

La chambre de combustion 1 est définie par la paroi 2, qui définie une section de forme ovoïdale. Comme on le comprendra mieux au vu de la figure 3, qui représente une coupe partielle de l'ensemble du brûleur selon un plan horizontal, la forme générale de la chambre de combustion est annulaire. Ce brûleur est en effet destiné à être placé autour d'une assiette de centrifugation de laine minérale, afin de générer une lame annulaire de gaz chaud participant à l'étirage des filaments sortant de l'assiette. Cette chambre est munie d'un orifice de détente 3 qui débouche dans une chambre de post-combustion 4 également de forme annulaire. A son extrémité, cette chambre se rétrécit et s'achève par une lèvre annulaire 5. On prévoit une alimentation en air, débouchant par un conduit 6 dans la chambre de combustion 1 après avoir circulé dans la double paroi de ladite chambre pour un préchauffage (double paroi non représentée). Ce courant d'air est guidé, à l'aide d'un déflecteur 7, vers un stabilisateur de flammes 8 représenté en figure 2. Ce stabilisateur est une pièce incurvée et métallique, disposée tout près de la paroi interne de la chambre de combustion 1. A la figure 4, on le voit en coupe : l'air provenant du conduit 6 arrive derrière ce stabilisateur et l'enveloppe, en le contournant. Ce stabilisateur 8 comporte deux parois 8a et 8b sensiblement en regard et réunies en l'une de leurs extrémités par un fond 8c incurvé de manière à constituer une zone semi-ouverte d'ouverture 8d opposée au fond 8c. Ce stabilisateur 8 définit entre les parois et à l'intérieur de la zone semi-ouverte une partie d'une zone de confinement dans laquelle s'effectue la combustion, représentée aux figures 2 et 4 par une couleur grisée. Le gaz combustible est injecté par l'orifice de sortie ou extrémité 9 d'un conduit 13 d'alimentation. Cette extrémité 9 est agencée soit à l'intérieur de la zone semi-ouverte du stabilisateur, à proximité du fond 8c, et/ou à l'avant du stabilisateur et de manière excentrée par rapport à l'axe de symétrie du stabilisateur. L'injection est ainsi faite de façon à ce que le gaz se trouve projeté vers les parois 8a et 8b et contre le fond du stabilisateur, et doive ensuite revenir vers l'avant du stabilisateur en longeant les parois. Ce parcours permet ainsi un mélange optimum du gaz avec l'air pour assurer une combustion totale. De plus, cette projection contre les parois du stabilisateur permet un refroidissement supplémentaire dudit stabilisateur.

Une portion de l'air va se trouver piégée dans la zone de confinement 10, et se mélanger au gaz combustible pour réaliser la combustion proprement dite. Dans la zone de confinement, on voit en figure 2 que deux noyaux de recirculation 11 et 12 de gaz se créent, symbolisés par les flèches. La combustion est essentiellement centrée dans la zone 13, qui est la frontière entre les deux noyaux de recirculation 11 et 12.

Pour une température standard de gaz d'étirage, par exemple vers 1400 à 1600°C, on préférera injecter le gaz via l'extrémité 9 située à l'avant du stabilisateur plutôt que proche du fond du stabilisateur pour une température plus froide, de l'ordre de 1200°C. Ainsi, le parcours effectué par le gaz jusqu'aux parois et fond du stabilisateur et son retour au delà de l'ouverture du stabilisateur est allongé et son parfait mélange avec l'air est assuré pour permettre une combustion totale.

Le gaz brûlé issu de la combustion est ensuite évacué, selon un axe A, qui est un axe de symétrie du stabilisateur 8 dans le plan de la coupe représentée en figure 2. Si l'on se rapporte à nouveau à la figure 1, ce gaz brûlé, de par la forme du stabilisateur 8, va donc être contraint de longer la paroi de la chambre de combustion 1 selon un parcours en boucle symbolisé par une flèche. La forme de la paroi à proximité de l'orifice de détente 3 est telle qu'elle contraint ce courant à se séparer en deux près de cet orifice : une partie du courant continue à "tourner" dans la chambre de combustion, tandis que le reste du courant se trouve évacué par cet orifice 3. La forme de la chambre de combustion permet donc de contrôler ce partage de courant, en créant une perte de charge juste en amont de l'orifice de détente 3.

Avant que l'air ne soit introduit dans la chambre de combustion 1 via le conduit 6, il circule dans la double paroi de la chambre de combustion (non représentée) pour un échange thermique avec le gaz circulant dans la chambre.

La figure 3 permet de visualiser la chambre de combustion du brûleur, en coupe horizontale : on a bien une forme annulaire, avec une pluralité de stabilisateurs 8 espacés régulièrement les uns des autres, concentriquement et disposés de façon à ce que leurs zones de confinement soient tournées vers "l'extérieur" de l'anneau (c'est-à-dire du côté opposé à son centre virtuel). Les stabilisateurs sont dans cet exemple organisés en deux rangées concentriques. Dans chaque rangée, les stabilisateurs sont espacés régulièrement les uns des autres. D'une rangée à l'autre, ils sont décalés, en quinconce : ce pas de décalage permet que les arrivées d'air puissent alimenter en air et refroidir de façon appropriée les stabilisateurs des deux rangées à la fois. Chaque stabilisateur est fixé dans la chambre de combustion par des moyens mécaniques qui permettent de régler son positionnement, et notamment de le faire pivoter afin d'orienter de différentes façons le flux de gaz brûlés sortant de sa zone de confinement (pivotement par rapport, notamment, à un axe radial de l'anneau que forme la chambre de combustion passant par le stabilisateur en question).

Dans ce cas de figure de la figure 3, chaque stabilisateur est disposé de façon à ce que le flux de gaz s'en échappe dans une direction sensiblement radiale, vers l' « extérieur » de l'anneau. On peut aussi « incliner » les stabilisateurs, notamment tous d'un même angle par rapport à l'axe radial mentionné plus haut, ce qui permet d'obtenir en sortie de brûleur un jet de gaz tangentiel.

Chacun des stabilisateurs est muni, comme décrit plus haut, d'une arrivée de combustible 9 à 100%. Par contre, en ce qui concerne l'arrivée du comburant (d'air), on peut faire en sorte qu'un conduit d'alimentation projette de l'air contre plusieurs stabilisateurs à la fois. On a ainsi une lame d'air générée par un conduit de forme appropriée, qui est capable d'alimenter en comburant au moins deux stabilisateurs à la fois, d'une même rangée et/ou disposés l'un derrière l'autre dans deux rangées différentes : les arrivées d'air sont ainsi prévues pour la première rangée de stabilisateurs (la plus proche du centre virtuel de l'anneau), l'excès d'air qu elles projettent parvenant également à la seconde rangée. L'espacement entre deux stabilisateurs adjacents d'une même rangée est étudié de façon à ce que les courants de gaz brûlés qui s'en échappent se rejoignent très vite, juste "après" leurs zones de confinement respectives. Pour plus de clarté, cela est illustré l'aide de la figure 4 (où les stabilisateurs, par commodité, sont représentés en ligne, mais la situation est similaire quand ils sont disposés concentriquement) : on y voit l'air symbolisé par les flèches qui vient frapper les stabilisateurs adjacents, et les courants de gaz brûlés issus de chacun d'entre eux venant se fondre en une seule nappe de gaz continue en sortie de zone de confinement.

La chambre de combustion 1 est munie d'une boîte à eau. La chambre est métallique, tout comme le stabilisateur. On peut se "permettre" d'avoir un stabilisateur métallique dans la mesure où, quand le brûleur fonctionne, sa paroi extérieure est en permanence en contact avec l'air relativement « frais » issu du conduit 6.

On peut aussi se "permettre" une chambre de combustion métallique, à partir du moment où l'on a organisé un système d'échange thermique avec l'air d'alimentation associé éventuellement à un système de refroidissement à eau (ou autre système équivalent). Une structure métallique est un gros avantage en termes de durabilité, de faible encombrement et de coût de fabrication modéré. Par rapport aux brûleurs à combustion interne conventionnels utilisés dans le domaine du fibrage, ce type de brûleur est beaucoup plus souple de fonctionnement.

Comme il y a des arrivés d'air et de gaz combustible séparés, on a un niveau de sécurité très élevé.

Ce brûleur a aussi une faible inertie, et assure une réponse rapide lors du réglage des débits en air et en combustible. Ces réglages sont faciles à faire.

Il permet d'atteindre une très large gamme de températures de gaz en sortie du brûleur, de 200 à 1 600°C. C'est donc un brûleur particulièrement intéressant pour obtenir des gaz relativement "froids", sans risque, contrairement aux brûleurs conventionnels, de décrochage de la flamme par dilution excessive : la flamme, dans une large gamme de ratio air/combustible, est capable de se maintenir dans la zone de confinement du stabilisateur.

Avec un tel brûleur, le jet de gaz sortant a une stabilité remarquable.

Son rendement énergétique/thermique est également bon. Il est amélioré encore quand on utilise le système à double paroi qui fonctionne comme un échangeur thermique efficace.

La structure du brûleur autorise ainsi des modifications relativement faciles à faire. Ainsi, on peut modifier le profil de la lèvre 5 et de la chambre de post-combustion 4, notamment pour obtenir un jet de gaz en sortie à angle d'inclinaison variable.

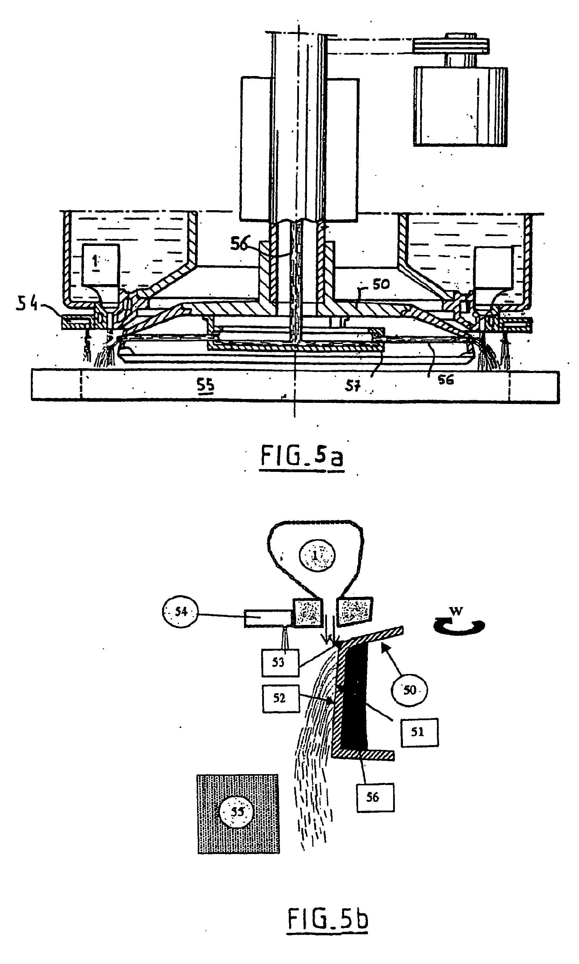

Ce brûleur ouvre de nouvelles perspectives dans le fibrage, tout particulièrement le fibrage dit « interne » utilisant un centrifugeur décrit dans les brevets précités. Comme représenté très schématiquement en figure 5, on a un centrifugeur 50 alimenté en son centre en verre fondu 56, et pourvu d'une bande périphérique 51 percée d'orifices 52 répartis en rangées. Le matériau à fibrer est déversé à travers un arbre creux dans un panier 57 qui est relié mécaniquement au centrifugeur. Le panier 57 est muni lui même d'orifices d'où est éjecté le matériau à fibrer vers la bande périphérique 51 quand le centrifugeur 50 et son panier 57 sont mis en rotation. La zone 53 de la bande périphérique présente un épaulement et est parfois désignée sous le terme de « point chaud », car c'est là que le centrifugeur est le plus chaud.

Le centrifugeur 50 est équipé du brûleur annulaire selon l'invention, qui émet des gaz qui vont étirer les filets coniques du verre fondu qui s'échappent des orifices 52 quand le centrifugeur 50 est mis en rotation autour de son axe vertical. On ne rentre pas dans le détail des autres éléments de l'installation de fibrage, qui sont connus par ailleurs, (notamment la couronne de soufflage 54 et l'anneau d'induction magnétique 55).

Par rapport à un fonctionnement standard, le brûleur selon l'invention permet d'avoir beaucoup plus de souplesse dans les paramètres de réglage du fibrage par le centrifugeur. Il s'agit notamment de la plage de température de fibrage, de l'efficacité de l'étirage gazeux (débit, température des gaz issus du brûleur...), de la vitesse de rotation du centrifugeur ou encore de la composition de la matière vitrifiable à fibrer.

Ainsi, en comparaison avec un fonctionnement standard, on peut maintenant choisir une température de gaz en sortie de brûleur nettement plus basse que de coutume, puisque ce brûleur spécifique le permet, tout en conservant une vitesse d'éjection élevée (>100m/s): au lieu d'avoir une température de gaz d'au moins 1400°C, on peut avoir une température de gaz d'au plus 1300°C, notamment inférieure à 1280°C, de préférence comprise entre 1100 et 1250°C. Les gaz d'étirage peuvent être ainsi « plus froids ». En parallèle, on peut contrôler la viscosité de la matière vitrifiable en fusion en sortie du centrifugeur, au point chaud de celui-ci (zone 53)(point où la viscosité est la plus basse )vers des valeurs jusqu'aux alentours de 100 poiseuilles, par exemple comprises entre 50 et 200 poiseuilles, alors que l'on a généralement des valeurs nettement plus élevées, de l'ordre de 300 poiseuilles, au point de basse viscosité : concrètement, on a donc lors de l'étirage un verre fondu moins visqueux, plus fluide et par conséquent plus facile à étirer.

Parmi les verres préférés que l'on peut fibrer par centrifugation interne avec le brûleur selon l'invention, on peut citer des verres de type boro-silico-sodo-calcique, dont les propriétés typiques sont :
- température correspondant à une viscosité en poiseuille de 100 (Tlog 3) comprise entre environ 1020 et 1100°C, notamment entre 1050° et 1080°C
- température de liquidus (T liquidus) comprise entre 900°C et 950°C

Par exemple avec ce type de verre, on a de préférence une température au point chaud d'au plus 1200°C, notamment une température comprise entre 950 et 1150°C, notamment aux environs de 1050°C. Par rapport à des conditions standards de fibrage, on a un écart de température moindre entre la température du verre au point chaud et la température des gaz d'étirage en sortie de brûleur, notamment un écart d'environ 100 à 200°C seulement.

Avantageusement, l'écart de température entre le point chaud du centrifugeur et le bas de bande périphérique (à savoir la rangée d'orifices la plus basse) est d'environ 40 à 80°C.

Il est à noter que pour maintenir le régime permanent du centrifugeur, à viscosité plus basse, et au même débit d'alimentation du centrifugeur (sans rupture d'alimentation de la réserve de verre en amont du centrifugeur), il est possible d'ajuster au moins l'un des autres paramètres suivants : diminuer le diamètre des trous de la bande périphérique du centrifugeur (par exemple jusqu'à 0,1 à 0,3 mm) et/ou augmenter leur nombre et /ou ajuster la vitesse de rotation dudit centrifugeur.

Ce mode nouveau de fonctionnement a en fait deux impacts très intéressants sur la qualité des fibres obtenues. Tout d'abord, l'histogramme des tailles des fibres obtenues (taille notamment appréciée par leur micronaire, de façon connue, et/ou par leur diamètre moyen) est plus resserrée autour d'une valeur moyenne : l'histogramme a schématiquement la forme d'une gaussienne plus étroite, avec un écart-type plus faible, notamment sensiblement égal à la moitié du diamètre moyen. Par exemple, on peut avoir un écart-type de l'ordre de 2 micromètres pour un diamètre moyen de fibre de 4 micromètres (alors que l'écart-type est plutôt de 3 ou 4 pour un même diamètre moyen avec un brûleur standard, toutes choses égales par ailleurs). D'autre part, on a remarqué que les fibres paraissent plus douces au toucher, ce qui est plus agréable pour l'opérateur qui installe la laine d'isolation et pour l'utilisateur final.

Selon une seconde approche, on peut également garder une température de gaz d'étirage standard, par exemple vers 1400 à 1600°C, mais modifier/augmenter le débit de gaz délivré par le brûleur. Le brûleur selon l'invention peut en effet être nettement plus puissant qu'un brûleur conventionnel. On peut quantifier cette puissance, notamment, par la quantité de combustible du type méthane qu'il consomme par unité de temps. Un brûleur conventionnel annulaire de diamètre 200 mm a une puissance ainsi mesurée d'environ 15 à 20 m³/heure, soit 0,75 à 1 m3 gaz/heure et par mm de diamètre de centrifugeur. Le brûleur selon l'invention peut atteindre des puissances d'au moins 25, 30, 35 ou même 40 m³/heure, soit des puissances d'au moins 1,25, notamment d'au moins 1,5, ou 1,75 ou même 2 m³ gaz/ heure et par mm de diamètre de centrifugeur.

Parallèlement, la puissance du brûleur peut aussi être quantifiée par le débit de gaz délivré, qui, dans ce domaine technique, s'exprime souvent par la mesure d'une pression en sortie de brûleur (que l'on peut relativement aisément mesurer par un tube Pitot), associée à la largeur de la lèvre du brûleur. Ici, on peut atteindre des pressions d'au moins 0,06 bar à 0,1 bar (600 à 1000 mm de colonne d'eau), pour une largeur de lèvre par exemple comprise entre 5 et 10 mm, alors que les pressions obtenues avec des brûleurs conventionnels sont plutôt de l'ordre de 0,04 bar à 0,05 bar (400 à 500 - mm de colonne d'eau). Pour éviter qu'avec de tels débits de gaz, les fibres une fois éjectées du centrifugeur ne viennent se rabattre sur le centrifugeur et/ou les unes sur les autres d'une rangée à l'autre d'orifices, on va modifier/augmenter en parallèle la vitesse de rotation du centrifugeur.

L'avantage de ce mode de fonctionnement à haut débit de gaz est que l'on peut augmenter la capacité d'étirage du centrifugeur : en augmentant la tirée par trou, c'est-à-dire le nombre de kg fibré par orifice de centrifugeur et par jour, on peut globalement augmenter la tirée du centrifugeur. On peut notamment atteindre des tirées d'au moins 1,2 à 1,5 kg/trou/jour, tout en conservant des dimensions de fibre moyennes intéressantes, notamment correspondant à un indice de finesse exprimé par un micronaire de 3 sous 5 grammes.

Ces deux modes de fonctionnement sont mentionnés à titre d'illustration, et le brûleur selon l'invention permet de sélectionner des paramètres de fibrage différents, de faire tout compromis entre souci de productivité, facilité de fibrage et qualité de la laine minérale obtenue.

## Revendications

1. Brûleur à combustion interne, notamment pour l'étirage de fibres minérales, comprenant une chambre de combustion (1) dans laquelle débouche(nt) au moins un conduit d'alimentation (6,13) en combustible(s) et en comburant(s), et munie d'un orifice de détente (3), la chambre de combustion étant munie d'au moins un élément stabilisateur de flamme (8) situé à proximité de la paroi interne de la chambre de combustion et de l'orifice de détente, le dit brûleur étant **caractérisé en ce que** l'élément stabilisateur de flamme (8) comporte deux parois pleines (8a, 8b) sensiblement en regard et réunies en l'une de leurs extrémités par un fond plein (8c) de manière à constituer une zone semi-ouverte d'ouverture (8d) opposée au fond (8c), une zone de confinement étant créée entre les parois (8a, 8b) et à proximité de l'ouverture (8d), et dans laquelle s'effectue au moins une partie de la combustion entre comburant(s) et combustible(s),
***et en ce qu***'un élément déflecteur (7) est interposé entre le stabilisateur de flamme (8) et l'orifice de détente (3), déflecteur derrière lequel débouche de préférence le conduit d'alimentation en comburant (6).

2. Brûleur selon la revendication 1 ***caractérisé en ce que*** la majorité, notamment l'essentiel, de la combustion entre comburant(s) et combustible(s), s'effectue dans la (les) zone(s) de confinement créée(s) par le(s) élément(s) stabilisateur(s) de flamme.

3. Brûleur selon l'une des revendications précédentes ***caractérisé en ce que*** la chambre de combustion (1) contient une pluralité d'éléments stabilisateurs de flamme (8).

4. Brûleur selon l'une des revendications précédentes ***caractérisé en ce que*** la chambre de combustion (1) comprend selon un plan horizontal au moins deux éléments stabilisateurs (8), notamment au moins 5 ou 10, de préférence disposés les uns à côté des autres avec un espacement régulier entre deux éléments stabilisateurs adjacents.

5. Brûleur selon la revendication 4 ***caractérisé en* ce *que*** la section horizontale de la chambre de combustion (1) est soit de type parallélogramme avec une pluralité de stabilisateurs disposés sensiblement en ligne, soit de type annulaire avec une pluralité de stabilisateurs (8) disposés concentriquement.

6. Brûleur selon l'une des revendications précédentes ***caractérisé en ce que*** la section verticale de la chambre de combustion (1) est au moins partiellement courbe, et présente un élément stabilisateur (8), ou plusieurs éléments stabilisateurs disposés selon des plans distincts.

7. Brûleur selon l'une des revendications précédentes ***caractérisé en ce que*** le(s) élément(s) stabilisateur(s) de flamme (8) est (sont) majoritairement, notamment essentiellement, métallique(s).

8. Brûleur selon l'une des revendications précédentes ***caractérisé en ce que*** l'élément stabilisateur de flamme (8), ou au moins l'un d'eux s'il y en a plusieurs, a une géométrie présentant une symétrie selon un plan et/ou une symétrie axiale, et notamment deux symétries selon deux plans perpendiculaires l'un à l'autre.

9. Brûleur selon la revendication 5 ***caractérisé en ce que*** l'élément stabilisateur de flamme (8), ou au moins l'un d'entre eux s'il y en a plusieurs, a sa projection perpendiculaire à l'un de ses plans de symétrie sous la forme approximativement d'un U ou d'un V.

10. Brûleur selon la revendication 8 ou la revendication 9 ***caractérisé en ce que*** l'élément stabilisateur de flamme (8), ou au moins l'un d'entre eux s'il y en a plusieurs, a sa projection perpendiculaire à l'un de ses plans de symétrie sous la forme approximative d'un triangle, de préférence aux coins arrondis, notamment sensiblement isocèle.

11. Brûleur selon l'une des revendications précédentes ***caractérisé en ce qu*'**un conduit d'alimentation (13) alimenté en gaz comprenant un (des) combustible(s) débouche par un orifice de sortie (9) dans la zone de confinement du ou d'au moins un des élément(s) stabilisateur(s) de flamme (8).

12. Brûleur selon la revendication 11 ***caractérisé en ce que*** l'orifice de sortie (9) est agencé entre les parois (8a, 8b) et à proximité du fond (8c) du stabilisateur et/ou situé à l'avant du stabilisateur et de manière excentrée par rapport à son axe de symétrie, le flux du gaz étant dirigé vers les parois du stabilisateur.

13. Brûleur selon la revendication 11 ou 12 ***caractérisé en ce que*** le conduit d'alimentation (13) débouchant dans la zone de confinement est alimenté majoritairement, ou essentiellement ou totalement en combustible.

14. Brûleur selon l'une des revendications précédentes ***caractérisé en ce que*** le(s) conduit(s) d'alimentation (6) alimenté en gaz comprenant du (des) comburant(s) débouche(nt) dans la chambre de combustion (1) de façon à projeter le(s)dit(s) comburant(s) du côté des parois de l'élément stabilisateur de flamme (8) opposé au côté qui se trouve en contact direct avec sa zone de confinement.

15. Brûleur selon la revendication 14 ***caractérisé en ce que*** le conduit d'alimentation (6) débouchant dans la chambre de combustion (1) de façon à projeter le comburant du côté des parois de l'élément stabilisateur (8) opposé au côté se trouvant en contact direct avec la zone de confinement est alimenté majoritairement, notamment essentiellement, de préférence à 100% par un comburant du type air.

16. Brûleur selon l'une des revendications précédentes ***caractérisé en ce que*** les conduits d'alimentation (6) en comburant et les conduits d'alimentation en combustible (13) sont distincts.

17. Brûleur selon la revendication 16 ***caractérisé en* ce *que*** le(s) conduit(s) d'alimentation en comburant(s) (6) et le(s) conduit(s) d'alimentation en combustible(s) (13) débouchent dans la chambre de combustion (1) à proximité du (des) élément(s) stabilisateur(s) de flamme (8) de façon à ce que la (les) zone(s) de confinement dudit (desdits) élément(s) stabilisateur(s) soient à la fois des zones de mélange entre comburant(s) et combustibles(s) et des zones de combustion.

18. Brûleur selon l'une des revendications précédentes ***caractérisé en ce que*** le mélange entre comburant(s) et combustible(s) se fait dans la chambre de combustion (1).

19. Brûleur selon l'une des revendications précédentes ***caractérisé en ce que*** la position du (des) élément(s) stabilisateur(s) de flamme (8) par rapport à la paroi interne de la chambre de combustion (1) contraint les gaz brûlés à longer au moins une partie de ladite paroi interne, notamment selon un parcours ayant approximativement la forme d'une boucle.

20. Brûleur selon l'une des revendications précédentes ***caractérisé en ce que*** la paroi interne de la chambre de combustion (1) est profilée de façon à maximiser le parcours des gaz brûlés issus de la ou des zone(s) de confinement de(s) stabilisateur(s) de flamme (8).

21. Brûleur selon l'une des revendications précédentes ***caractérisé en ce que*** la paroi interne de la chambre de combustion (1) est profilée de façon à contraindre le courant de gaz brûlés issu de la zone de confinement du stabilisateur de flamme (8) à se séparer en deux à proximité de l'orifice de détente (3), un courant étant évacué par ledit orifice et l'autre poursuivant son parcours, notamment en forme de boucle, dans la chambre de combustion (1).

22. Brûleur selon l'une des revendications précédentes ***caractérisé en ce que*** l'orifice de détente (3) débouche sur une chambre de post-combustion (4) s'achevant de préférence par une lèvre (5) se situant à l'extrémité d'une zone de rétrécissement de ladite chambre de post-combustion (4).

23. Brûleur selon l'une des revendications précédentes ***caractérisé en ce que*** la paroi de la chambre de combustion (1) est une double paroi dans laquelle circule le comburant, notamment de l'air, avant de déboucher par un conduit d'alimentation à l'intérieur de ladite chambre.

24. Brûleur selon l'une des revendications précédentes ***caractérisé en ce que*** la paroi interne de la chambre de combustion (1) est essentiellement métallique.

25. Brûleur selon l'une des revendications précédentes ***caractérisé en ce que*** la chambre de combustion est munie de moyens de refroidissement extérieurs.

26. Procédé de formation de fibres minérales dans lequel on étire les fibres par des courants gazeux émis à l'aide d'au moins un brûleur selon l'une des revendications précédentes, éventuellement en combinaison avec des moyens de centrifugation ou des moyens d'étirage du type filière.

27. Procédé selon la revendication précédente, ***caractérisé en ce que*** l'on utilise comme machine de fibrage un centrifugeur (50) équipé d'un brûleur annulaire et ***en ce qu***'on choisit la température des gaz en sortie de brûleur à une température inférieure à 1300°C, notamment inférieure à 1280°C, de préférence comprise entre 1100°C et 1250°C.

28. Procédé selon la revendication précédente, ***caractérisé en ce qu*'** on choisit la viscosité de la matière vitrifiable en fusion en sortie de centrifugeur (50) au point chaud (53) de celui-ci entre 50 et 200 poiseuilles, notamment vers 100 poiseuilles.

29. Procédé selon la revendication 27 ou la revendication 28 ***caractérisé en ce qu*'**on choisit la température de la matière vitrifiable en fusion, en sortie de centrifugeur au point chaud de celui-ci, d'au plus 1200°C, notamment une température comprise entre 950 et 1150°C, pour un verre du type boro-silico-sodo-calcique ayant une température Tlog3 comprise entre 1040 et 1080°C et une température T liquidus comprise entre 900°C et 950°C.

30. Procédé selon la revendication 27, ***caractérisé en ce que*** l'on utilise comme machine de fibrage est un centrifugeur (50) équipé d'un brûleur annulaire et ***en ce que*** ledit brûleur annulaire a une puissance spécifique, définie comme la quantité de combustible du type méthane consommée par unité de temps et de diamètre de centrifugeur, d'au moins 1,25, notamment d'au moins 1.5, 1.75 ou 2 m³ de gaz par heure et par mm de diamètre de centrifugeur.

31. Procédé selon la revendication 27 ***caractérisé en ce que*** ladite machine de fibrage est un centrifugeur (50) équipé d'un brûleur annulaire et ***en ce que*** les gaz en sortie de brûleur ont un débit élevé, avec une pression d'au moins 600 mm de colonne d'eau, ou d'au moins 800 à 1000 mm de colonne d'eau, pour une largeur de lèvre de brûleur comprise notamment entre 5 et 10 mm.

32. Procédé selon la revendication 27, ***caractérisé en ce qu*'**on obtient des fibres de micronaire d'environ 3 sous 5 grammes avec un débit d'au moins 1,5 kgrour/trou de la bande périphérique (51) du centrifugeur (50).

33. Utilisation du brûleur selon l'une quelconque des revendications 1 à 25 et en combinaison avec un centrifugeur (50) associé à un panier (57) pour fabriquer selon le procédé de l'une quelconque des revendications 26 à 32 de la laine minérale présentant une répartition de diamètre de fibre telle que l'écart-type de cette répartition est sensiblement égal à la moitié du diamètre moyen, notamment d'environ 2 micromètres pour un diamètre moyen d'environ 4 micromètres.

## Claims

1. An internal combustion burner, especially for the attenuation of mineral fibers, comprising a combustion chamber (1), into which at least one duct (6, 13) for feeding fuel(s) and oxidizer(s) opens, and provided with an expansion orifice (3), the combustion chamber being provided with at least one flame stabilizing element (8) located near the internal wall of the combustion chamber (1) and near the expansion orifice, said burner being ***characterized in that*** the flame stabilizing element (8) has two solid walls (8a, 8b) substantially facing each other and joined together at one of their ends by a solid end wall (8c) so as to constitute a semi-open opening zone (8d) opposite the end wall (8c), a confinement zone (10) being created between the walls (8a, 8b) and near the opening (8d), in which confinement zone at least part of the combustion between oxidizer(s) and fuel(s) takes place, and ***in that*** a deflector element (7) is interposed between the flame stabilizer (8) and the expansion orifice (3), behind which deflector the oxidizer feed duct (6) preferably opens.

2. The burner as claimed in claim 1, ***characterized in that*** most, especially nearly all, of the combustion between oxidizer(s) and fuel(s) takes place in the confinement zone(s) created by the flame stabilizing element (s) .

3. The burner as claimed in one of the preceding claims, ***characterized in that*** the combustion chamber (1) contains a plurality of flame stabilizing elements (8).

4. The burner as claimed in one of the preceding claims, ***characterized in that*** the combustion chamber (1) comprises, in a horizontal plane, at least two, especially at least 5 or 10, stabilizing elements (8), preferably placed beside one another with a uniform spacing between two adjacent stabilizing elements.

5. The burner as claimed in claim 4, ***characterized in that*** the horizontal cross section of the combustion chamber (1) is either of the parallelogram type, with a plurality of stabilizers placed approximately in line, or of the annular type, with a plurality of stabilizers (8) placed concentrically.

6. The burner as claimed in one of the preceding claims, ***characterized in that*** the vertical cross section of the combustion chamber (1) is at least partly curved and has one stabilizing element (8) or several stabilizing elements lying in distinct planes.

7. The burner as claimed in one of the preceding claims, ***characterized in that*** the flame stabilizing element(s) (8) is (are) predominantly, especially almost entirely, made of metal.

8. The burner as claimed in one of the preceding claims, ***characterized in that*** the flame stabilizing element (8), or at least one of them if there are more than one, has a geometry with a symmetry in a plane and/or an axial symmetry, and especially two symmetries in two planes perpendicular to each other.

9. The burner as claimed in claim 5, ***characterized in that*** the flame stabilizing element (8), or at least one of them if there are more than one, has its projection perpendicular to one of its planes of symmetry approximately in the form of a U or a V.

10. The burner as claimed in claim 8 or claim 9, ***characterized in that*** the flame stabilizing element (8), or at least one of them if there are more than one, has its projection perpendicular to one of its planes of symmetry in the approximate shape of a triangle, preferably with rounded corners, especially an approximately isosceles triangle.

11. The burner as claimed in one of the preceding claims, ***characterized in that*** a feed duct (13) fed with gas containing one or more fuels opens via an outlet orifice (9) into the confinement zone of the flame stabilizing element (8) or of at least one of the flame stabilizing elements (8).

12. The burner as claimed in claim 11, ***characterized in that*** the outlet orifice (9) is placed between the walls (8a, 8b) and near the end wall (8c) of the stabilizer and/or located to the front of the stabilizer and so as to be offset with respect to its axis of symmetry, the stream of gas being directed toward the walls (8a, 8b) of the stabilizer.

13. The burner as claimed in claim 11 or 12, ***characterized in that*** the feed duct (13) opening into the confinement zone (10) is fed predominantly, or almost entirely, or completely with fuel.

14. The burner as claimed in one of the preceding claims, ***characterized in that*** the feed duct(s) (6) fed with gas containing the oxidizer(s) opens into the combustion chamber (1) so as to spray said oxidizer(s) on that side of the walls of the flame stabilizing element (8) that is opposite the side in direct contact with its confinement zone (10).

15. The burner as claimed in claim 14, ***characterized in that*** the feed duct (6) opening into the combustion chamber (1), so as to spray the oxidizer onto that side of the walls of the stabilizing element (8) that is opposite the side in direct contact with the confinement zone (10), is fed predominantly, especially almost entirely, or preferably 100% with an air-type oxidizer.

16. The burner as claimed in one of the preceding claims, ***characterized in that*** the oxidizer feed ducts (6) and the fuel feed ducts (13) are separate.

17. The burner as claimed in claim 16, ***characterized in that*** the duct(s) (6) for feeding oxidizer(s) and the duct(s) (13) for feeding fuel(s) open into the combustion chamber (1) near the flame stabilizing element(s) (8) so that the confinement zone(s) (10) of said stabilizing element(s) are both mixing zones, for mixing oxidizer(s) with fuel(s), and combustion zones.

18. The burner as claimed in one of the preceding claims, ***characterized in that*** the oxidizer(s) and fuel(s) are mixed in the combustion chamber (1).

19. The burner as claimed in one of the preceding claims, ***characterized in that*** the position of the flame stabilizing element(s) (8) relative to the internal wall of the combustion chamber (1) forces the burnt gases to run along at least part of said internal wall, especially along a path having approximately the form of a loop.

20. The burner as claimed in one of the preceding claims, ***characterized in that*** the internal wall of the combustion chamber (1) is profiled in order to maximize the path of the burnt gases emanating from the confinement zone(s) (10) of the flame stabilizer(s) (8).

21. The burner as claimed in one of the preceding claims, ***characterized in that*** the internal wall of the combustion chamber (1) is profiled so as to force the stream of burnt gases coming from the confinement zone (10) of the flame stabilizer (8) to separate into two streams near the expansion orifice (3), one stream being expelled via said orifice and the other continuing its path, especially in the form of a loop, in the combustion chamber (1).

22. The burner as claimed in one of the preceding claims, ***characterized in* that** the expansion orifice (3) opens into an afterburner chamber (4) preferably terminating in a lip (5) located at the end of a narrowing zone of said afterburner chamber (4).

23. The burner as claimed in one of the preceding claims, ***characterized in that*** the wall of the combustion chamber (1) is a double wall within which the oxidizer, especially air, flows before opening out into said chamber via a feed duct.

24. The burner as claimed in one of the preceding claims, ***characterized in that*** the internal wall of the combustion chamber (1) is made almost entirely of metal.

25. The burner as claimed in one of the preceding claims, ***characterized in that*** the combustion chamber is provided with external cooling means.

26. A method of formation of mineral fibers, in which the fibers are attenuated by gas streams emitted with at least one burner as claimed in one of the preceding claims, eventually in combination with a centrifugation means or attenuation means of the bushing type.

27. A method as claimed in the preceding claim, ***characterized in that*** a spinner (50) equipped with an annular burner is used as a fiberizing machine and **in that** the temperature of the gases output by the burner is chosen to be a temperature below 1300°C, especially below 1280°C, preferably between 1100°C and 1250°C.

28. The method as claimed in the preceding claim, ***characterized in that*** the viscosity of the molten vitrifiable material output by the spinner (50) at the hot spot (53) of the latter is chosen to be between 50 and 200 poiseuilles, especially around 100 poiseuilles.

29. The method as claimed in claim 27 or claim 28, ***characterized in that*** the temperature of the molten vitrifiable material, output by the spinner at the hot spot of the latter, is chosen to be at most 1200°C, especially a temperature of between 950 and 1150°C, for a soda-lime borosilicate type glass having a T_{log 3} of between 1040 and 1080°C and a temperature T_{liquidus} of between 900 and 950°C.

30. The method as claimed in claim 27, ***characterized in that*** said fiberizing machine is a spinner (50) equipped with an annular burner, **and in that** said annular burner has a specific power, defined as the amount of fuel of the methane type consumed per unit time and per spinner diameter, of at least 1.25, especially at least 1.5, 1.75 or 2 m³ of gas per hour and per mm of spinner diameter.

31. The method as claimed in claim 27, ***characterized in that*** said fiberizing machine is a spinner (50) equipped with an annular burner, **and in that** the gases output by the burner have a high flow rate, with a pressure of at least 600 mm of water column, or at least 800 to 1000 mm of water column, for a burner lip width of between especially 5 and 10 mm.

32. The method as claimed in claim 27, ***characterized in that*** fibers are obtained with a micronaire of about 3 below 5 grams with a flow rate of at least 1.5 kg per day per hole of the peripheral band (51) of the spinner (50).

33. Use of the burner as claimed in any one of claims 1 to 25 in combination with a spinner (50) combined with a basket (57) in order to produce, according to the method as claimed in any one of claims 26 to 32, mineral wool having a fiber diameter distribution such that the standard deviation of this distribution is approximately equal to half the mean diameter, especially about 2 microns for a mean diameter of about 4 microns.

## Patentansprüche

1. Brenner mit interner Verbrennung, insbesondere zum Ausziehen von Mineralfasern, welcher eine Verbrennungskammer (1) aufweist, in die mindestens eine Speiseleitung (6, 13) für Brennstoff(e) und Oxidationsmittel mündet und die mit einer Entspannungsöffnung (3) versehen ist, wobei die Verbrennungskammer mit mindestens einem Flammenstabilisierungselement (8) versehen ist, das sich in der Nähe der Innenwand der Verbrennungskammer und der Entspannungsöffnung befindet, wobei der Brenner **dadurch gekennzeichnet ist, dass** das Flammenstabilisierungselement (8) zwei massive Wände (8a, 8b) aufweist, die einander im Wesentlichen gegenüberliegen und an einem ihrer Enden durch einen massiven Boden (8c) derart verbunden sind, dass sie eine zum Boden (8c) entgegengesetzte, halb offene Öffnungszone (8d) darstellen, wobei zwischen den Wänden (8a, 8b) und in der Nähe der Öffnung (8d) eine Einschließungszone (10) geschaffen wird, in der zumindest ein Teil der Verbrennung zwischen Oxidationsmittel(n) und Brennstoff(en) abläuft, sowie **dadurch, dass** zwischen dem Flammenstabilisator (8) und der Entspannungsöffnung (3) ein Ablenkelement (7) angeordnet ist, hinter dem bevorzugt die Speiseleitung für Oxidationsmittel (6) einmündet.

2. Brenner nach Anspruch 1, **dadurch gekennzeichnet, dass** die Verbrennung zwischen Oxidationsmittel(n) und Brennstoff(en) zum Großteil, insbesondere im Wesentlichen, in der (den) durch das (die) Flammenstabilisierungselement(e) geschaffenen Einschließungszone(n) (10) abläuft.

3. Brenner nach einem der vorherigen Ansprüche, **dadurch gekennzeichnet, dass** die Verbrennungskammer (1) eine Mehrzahl von Flammenstabilisierungselementen (8) enthält.

4. Brenner nach einem der vorherigen Ansprüche, **dadurch gekennzeichnet, dass** die Verbrennungskammer (1) gemäß einer horizontalen Ebene mindestens zwei, insbesondere mindestens 5 oder 10 Stabilisierungselemente (8) aufweist, die bevorzugt mit einem gleichmäßigen Abstand nebeneinander zwischen zwei benachbarten Stabilisierungselementen angeordnet sind.

5. Brenner nach Anspruch 4, **dadurch gekennzeichnet, dass** der Horizontalschnitt der Verbrennungskammer (1) entweder vom Parallelogrammtyp mit einer Mehrzahl von im Wesentlichen in einer Linie angeordneten Stabilisatoren oder vom Ringtyp mit einer Mehrzahl von konzentrisch angeordneten Stabilisatoren (8) ist.

6. Brenner nach einem der vorherigen Ansprüche, **dadurch gekennzeichnet, dass** der Vertikalschnitt der Verbrennungskammer (1) zumindest teilweise gekrümmt ist und ein Stabilisierungselement (8) oder mehrere gemäß verschiedenen Ebenen angeordnete Stabilisierungselemente aufweist.

7. Brenner nach einem der vorherigen Ansprüche, **dadurch gekennzeichnet, dass** das (die) Flammenstabilisierungselement(e) (8) zum Großteil, insbesondere im Wesentlichen, aus Metall besteht (bestehen).

8. Brenner nach einem der vorherigen Ansprüche, **dadurch gekennzeichnet, dass** das Flammenstabilisierungselement (8) bzw. im Falle einer Mehrzahl von Flammenstabilisierungselementen mindestens eines davon eine Geometrie besitzt, die eine Symmetrie gemäß einer Ebene und/oder eine Axialsymmetrie, und insbesondere zwei Symmetrien gemäß zwei zueinander senkrechten Ebenen aufweist.

9. Brenner nach Anspruch 5, **dadurch gekennzeichnet, dass** das Flammenstabilisierungselement (8) bzw. im Falle einer Mehrzahl von Flammenstabilisierungselementen mindestens eines davon eine senkrechte Projektion auf eine seiner Symmetrieebenen aufweist, die annähernd U- oder V-förmig ist.

10. Brenner nach Anspruch 8 oder Anspruch 9, **dadurch gekennzeichnet, dass** das Flammenstabilisierungselement (8) bzw. im Falle einer Mehrzahl von Flammenstabilisierungselementen mindestens eines davon eine senkrechte Projektion auf eine seiner Symmetrieebenen aufweist, welche annähernd die Form eines Dreiecks besitzt, dessen Ecken bevorzugt gerundet sind, und das insbesondere im Wesentlichen gleichschenklig ist.

11. Brenner nach einem der vorherigen Ansprüche, **dadurch gekennzeichnet, dass** eine Speiseleitung (13), welche mit einem Gas versorgt wird, das einen Brennstoff bzw. Brennstoffe umfasst, über eine Austrittsöffnung (9) in die Einschließungszone des Flammenstabilisierungselementes (8) bzw. mindestens eines der Flammenstabilisierungselemente (8) mündet.

12. Brenner nach Anspruch 11, **dadurch gekennzeichnet, dass** die Austrittsöffnung (9) zwischen den Wänden (8a, 8b) und in der Nähe des Bodens (8c) des Stabilisators angeordnet ist und/oder vor dem Stabilisator und auf dessen Symmetrieachse bezogen exzentrisch gelegen ist, wobei der Gasfluss auf die Wände des Stabilisators gerichtet ist.

13. Brenner nach Anspruch 11 oder 12, **dadurch gekennzeichnet, dass** die in die Einschließungszone (10) mündende Speiseleitung (13) zum Großteil oder im Wesentlichen oder ausschließlich mit Brennstoff versorgt wird.

14. Brenner nach einem der vorherigen Ansprüche, **dadurch gekennzeichnet, dass** die Speiseleitung(en) (6), welche mit Gas versorgt wird (werden), das (ein) Oxidationsmittel umfasst, derart in die Verbrennungskammer (1) mündet (münden), dass das (die) Oxidationsmittel auf derjenigen Seite der Wände des Flammenstabilisierungselementes (8) eingeblasen wird (werden), die zu der mit seiner Einschließungszone (10) in direktem Kontakt stehenden Seite entgegengesetzt ist.

15. Brenner nach Anspruch 14, **dadurch gekennzeichnet, dass** die Speiseleitung (6), die derart in die Verbrennungskammer (1) mündet, dass das Oxidationsmittel auf derjenigen Seite der Wände des Stabilisierungselementes (8) eingeblasen wird, die zu der mit der Einschließungszone (10) in direktem Kontakt stehenden Seite entgegengesetzt ist, zum Großteil, insbesondere im Wesentlichen, bevorzugt zu 100% mit einem Oxidationsmittel vom Typ Luft versorgt wird.

16. Brenner nach einem der vorherigen Ansprüche, **dadurch gekennzeichnet, dass** die Speiseleitungen (6) für Oxidationsmittel und die Speiseleitungen (13) für Brennstoff voneinander verschieden sind.

17. Brenner nach Anspruch 16, **dadurch gekennzeichnet, dass** die Speiseleitung(en) (6) für Oxidationsmittel und die Speiseleitung(en) (13) für Brennstoff(e) in der Nähe des (der) Flammenstabilisierungselement(e) (8) derart in die Verbrennungskammer (1) mündet (münden), dass die Einschließungszone(n) (10) des Flammenstabilisierungselementes (der Flammenstabilisierungselemente) zugleich eine Zone (Zonen) für die Vermischung zwischen Oxidationsmittel(n) und Brennstoff(en) und Verbrennungszonen ist (sind).

18. Brenner nach einem der vorherigen Ansprüche, **dadurch gekennzeichnet, dass** die Vermischung zwischen Oxidationsmittel(n) und Brennstoff(en) in der Verbrennungskammer (1) stattfindet.

19. Brenner nach einem der vorherigen Ansprüche, **dadurch gekennzeichnet, dass** die Position des Flammenstabilisierungselementes (der Flammenstabilisierungselemente) (8) relativ zur Innenwand der Verbrennungskammer (1) die Verbrennungsabgase zwingt, an zumindest einem Teil der Innenwand entlangzustreichen, und zwar insbesondere gemäß einem annähernd schleifenförmigen Verlauf.

20. Brenner nach einem der vorherigen Ansprüche, **dadurch gekennzeichnet, dass** die Innenwand der Verbrennungskammer (1) ein solches Profil aufweist, dass der Verlauf der aus der (den) Einschließungszone(n) (10) des Flammenstabilisators (der Flammenstabilisatoren) (8) stammenden Verbrennungsabgase maximiert wird.

21. Brenner nach einem der vorherigen Ansprüche, **dadurch gekennzeichnet, dass** die Innenwand der Verbrennungskammer (1) ein solches Profil aufweist, dass der aus der Einschließungszone des Flammenstabilisators (8) stammende Strom von Verbrennungsabgasen gezwungen wird, sich in der Nähe der Entspannungsöffnung (3) zweizuteilen, so dass ein Strom über diese Öffnung abgeführt wird und der andere weiter seinem Verlauf in der Verbrennungskammer (1) folgt, der insbesondere schleifenförmig ist.

22. Brenner nach einem der vorherigen Ansprüche, **dadurch gekennzeichnet, dass** die Entspannungsöffnung (3) über eine Nachverbrennungskammer (4) ausmündet, die bevorzugt in eine Lippe (5) ausläuft, welche sich am Ende einer Verengungszone der Nachverbrennungskammer (4) befindet.

23. Brenner nach einem der vorherigen Ansprüche, **dadurch gekennzeichnet, dass** die Wand der Verbrennungskammer (1) eine doppelte Wand ist, die das Oxidationsmittel, insbesondere Luft, durchströmt, bevor sie über eine Speiseleitung ins Innere der Kammer mündet.

24. Brenner nach einem der vorherigen Ansprüche, **dadurch gekennzeichnet, dass** die Innenwand der Verbrennungskammer (1) im Wesentlichen aus Metall besteht.

25. Brenner nach einem der vorherigen Ansprüche, **dadurch gekennzeichnet, dass** die Verbrennungskammer mit externen Kühleinrichtungen versehen ist.

26. Verfahren zur Bildung von Mineralfasern, bei dem die Fasern durch Gasströme ausgezogen werden, die mithilfe eines Brenners nach einem der vorherigen Ansprüche abgegeben werden, gegebenenfalls in Kombination mit Zentrifugiereinrichtungen oder Auszieheinrichtungen vom Typ einer Spinndüse.

27. Verfahren nach dem vorherigen Anspruch, **dadurch gekennzeichnet, dass** als Zerfaserungsaggregat ein mit einem Ringbrenner ausgerüstetes Schleuderorgan (50) verwendet wird, sowie **dadurch, dass** die Temperatur der Gase beim Austritt aus dem Brenner als eine Temperatur gewählt wird, die weniger als 1300°C, insbesondere weniger als 1280°C beträgt, und die bevorzugt zwischen 1100°C und 1250°C liegt.

28. Verfahren nach dem vorherigen Anspruch, **dadurch gekennzeichnet, dass** die Viskosität des als Schmelze vorliegenden, verglasbaren Materials beim Austritt aus dem Schleuderorgan (50) an dessen heissester Stelle (53) als zwischen 50 und 200 Poiseuille liegend, insbesondere um 100 Poiseuille, gewählt wird.

29. Verfahren nach Anspruch 27 oder Anspruch 28, **dadurch gekennzeichnet, dass** bei einem Glas vom Typ Soda-Kalk-Borsilikat mit einer Temperatur T_{log3} von zwischen 1040 und 1080°C und einer Temperatur T_{liquidus} von zwischen 900°C und 950°C die Temperatur des als Schmelze vorliegenden, verglasbaren Materials beim Austritt aus dem Schleuderorgan an dessen heissester Stelle als eine höchstens 1200°C betragende, insbesondere zwischen 950 und 1150°C liegende Temperatur gewählt wird.

30. Verfahren nach Anspruch 27, **dadurch gekennzeichnet, dass** als Zerfaserungsaggregat ein mit einem Ringbrenner ausgerüstetes Schleuderorgan (50) verwendet wird, sowie **dadurch, dass** der Ringbrenner eine spezifische Leistung besitzt, welche als die pro Zeiteinheit und pro Einheit des Schleuderorgandurchmessers verbrauchte Menge an Brennstoff vom Typ Methan definiert ist und mindestens 1,25, insbesondere mindestens 1,5, 1,75 oder 2 m³ Gas pro Stunde und pro mm Durchmesser des Schleuderorgans beträgt.

31. Verfahren nach Anspruch 27, **dadurch gekennzeichnet, dass** das Zerfaserungsaggregat ein mit einem Ringbrenner ausgerüstetes Schleuderorgan (50) ist, sowie **dadurch, dass** die Gase beim Austritt aus dem Brenner einen erhöhten Durchsatz mit einem Druck von mindestens 600 mm Wassersäule oder mindestens 800 bis 1000 mm Wassersäule bei einer insbesondere zwischen 5 und 10 mm liegenden Breite der Brennerlippe aufweisen.

32. Verfahren nach Anspruch 27, **dadurch gekennzeichnet, dass** Fasern mit einem Micronaire von ca. 3/5 g mit einem Durchsatz von mindestens 1,5 kg/Tag/Loch der Umfangswandung (51) des Schleuderorgans (50) erhalten werden.

33. Verwendung des Brenners nach einem der Ansprüche 1 bis 25 und in Kombination mit einem Schleuderorgan (50) in Verbindung mit einem Korb (57), um gemäß dem Verfahren nach einem der Ansprüche 26 bis 32 Mineralwolle mit einer solchen Verteilung der Faserdurchmesser herzustellen, dass die Standardabweichung dieser Verteilung im Wesentlichen gleich der Hälfte des mittleren Durchmessers, insbesondere ca. 2 µm bei einem mittleren Durchmesser von ca. 4 µm ist.
